# FASCICULE DE BREVET EUROPEEN

(11) **EP 0 575 246 B1**
(45) Date de publication et mention de la délivrance du brevet: **14.01.1998**
(21) Numéro de dépôt: 93401537.1
(22) Date de dépôt: 16.06.1993
(51) Int. Cl.: H04B 7/26

(54) **Radiodiffusion à isofréquence avec suite d'antennes émettant un même programme à polarisation orthogonale entre deux antennes consécutives**
Gleichfrequenzrundfunkübertragung eines einzigen Programms mittels einer Folge von Antennen mit orthogonaler Polarisation für zwei sich folgenden Antennen
Isofrequency broadcasting of a single program with a sequence of antennas having orthogonal polarisation for two consecutive antennas

(30) Priorité: 17.06.1992 FR 9207334
(43) Date de publication de la demande: 22.12.1993
(73) Titulaire: COMPAGNIE FINANCIERE ET INDUSTRIELLE DES AUTOROUTES, 92316 Sèvres Cedex (FR)
(72) Inventeur: Chemin, Henri, F-75016 Paris (FR)
(74) Mandataire: Serin, Jean-Pierre

(56) Documents cités:
- EP-A- 0 370 915

## Description

L'invention concerne un procédé et un dispositif de radiodiffusion a isofréquence a interférences atténuées, destiné a la réception a bord d'un véhicule et sur la même fréquence, d'un même programme tout le long du trajet parcouru, et plus particulièrement un perfectionnement à celui-ci.

Dans la demande de brevet français n° 88 15254 (correspondant à EP-A-0 370 915), la déposante décrit un procédé et un dispositif du type précité dans lequel on dispose, le long du trajet, des émetteurs, ou des réémetteurs, appelés ci-après relais, placés entre antennes d'émission et de réception, et calés sur la même fréquence, lesdits relais étant directionnels et deux relais consécutifs étant dirigés approximativement dans la même direction. Selon cette demande, on utilise des groupements directionnels d'antennes élémentaires décalées dans l'espace de λ/4 et alimentés de telle façon que les champs émis s'ajoutent dans la direction de l'émission et se soustraient pour s'annuler dans la direction opposée.

Afin d'obtenir une réception maximum du signal par les antennes des véhicules, pratiquement toutes verticales, ou tout au moins contenues dans un plan vertical comme les antennes fouet, la polarisation des signaux de tous les relais est verticale.

Selon ce système, les relais successifs sont disposés a intervalles de 5 a 7 Km selon le terrain, de sorte que, leur puissance n'étant que de l'ordre de 10W (puissance de l'équipement actif qui a lieu d'être multipliée par le gain relatif de l'antenne utilisée), chaque relais (n) reçoit, dans le cas de figure le plus courant, le signal du précédent (n-1) mais pas, ou fortement atténué, celui du relais encore avant (n-2).

Or, dans certains cas de profil de terrain, l'un quelconque des relais de la chaîne peut aussi recevoir un signal du relais (n-2), (n-3), voire (n-4). En pratique, la puissance étant relativement faible, les signaux (n-3), (n-4), etc..., sont trop fortement atténués pour devoir être pris en compte. Par contre il faudra tenir compte du signal (n-2). Le relais (n) reçoit donc la somme de deux tensions, celle des signaux provenant des relais (n-1) et (n-2), ces signaux ayant parcouru le même trajet, mais l'un étant décalé par rapport à l'autre du temps de transit d'un relais, le relais (n-1), c'est-à-dire, de 2,5 à 4 µs. On va donc avoir une modulation d'amplitude fonction de la fréquence.

Le défaut précité, la modulation d'amplitude, entraîne un étalement de la zone de raccordement (zone dans laquelle le signal reçu du relais Rₙ₋₁ par le récepteur du véhicule a la même amplitude que le signal reçu à l'arrière du relais Rₙ), ce qui occasionne une gène notable lorsque le véhicule parcours cette zone tous les 7 à 10 Km. La puissance dans les creux de modulation est bien sûr réduite, ce qui limite encore le confort d'écoute et même la portée.

Selon la demande de brevet n° 91 02798 (correspondant à EP-A-0 504 018), on vise à palier ces inconvénients en déphasant le signal de sortie d'un ou plusieurs émetteurs de la chaîne d'une demi onde, soit de 180° afin de compenser les déformations de la courbe du signal émis par chaque relais, déformations dues aux différences de temps de trajet des différents signaux reçus et additionnés dans ce relais et/ou les précédents.

Grâce au dispositif d'inversion de 180° de la phase, de relais en relais ou chaque fois que c'est nécessaire, on corrige bien, selon cette deuxième demande de brevet, les effets néfastes de ces défauts, mais ceci au prix d'une diminution résiduelle de la bande passante après un grand nombre de relais.

Le but de la présente invention est d'éliminer les Zéros de la zone d'égalité des champs, c'est-à-dire éliminer l'absence de signal reçu au point où le signal provenant d'un émetteur (n) est annulé par le signal provenant de l'émetteur (n-1). Mais il est également possible, si l'on utilise un système comme celui des précédents brevets, d'améliorer les résultats obtenus avec les solutions déjà apportées.

Cette élimination des Zéros de la zone d'égalité des champs peut également se faire dans le cas d'un réseau d'émetteurs ou de réémetteurs non directionnels et recevant le signal par tout autre moyen qu'une antenne de réception, par exemple par fibre optique, câble, faisceau hertzien, etc...

Dans ce but, selon l'invention, les signaux ne sont plus polarisés verticalement mais, de manière alternée, à 45° par rapport à la verticale. C'est-à-dire que les antennes vont présenter alternativement un angle de + ou - 45° par rapport à la verticale (le signe étant ici arbitraire).

L'invention sera mieux comprise au moyen d'un exemple de réalisation représenté sur le dessin annexé, sur lequel :
- La figure 1 montre la variation d'amplitude des champs des signaux reçus par le récepteur en déplacement en fonction de sa position par rapport aux émetteurs (n) et (n-1);
- La figure 2 montre la rotation en sens inverse des phases des deux champs reçus par le récepteur mobile;
- La figure 3 montre les polarisations des relais (n), (n-1), (n-2) dans le cas de relais recevant le signal par une antenne réceptrice;
- La figure 4 montre la composition des champs des relais (n-1) et (n);
- La figure 5 montre dans le cas de réception par un véhicule la composition des champs sur l'antenne réceptrice et les variations de la polarisation résultante.

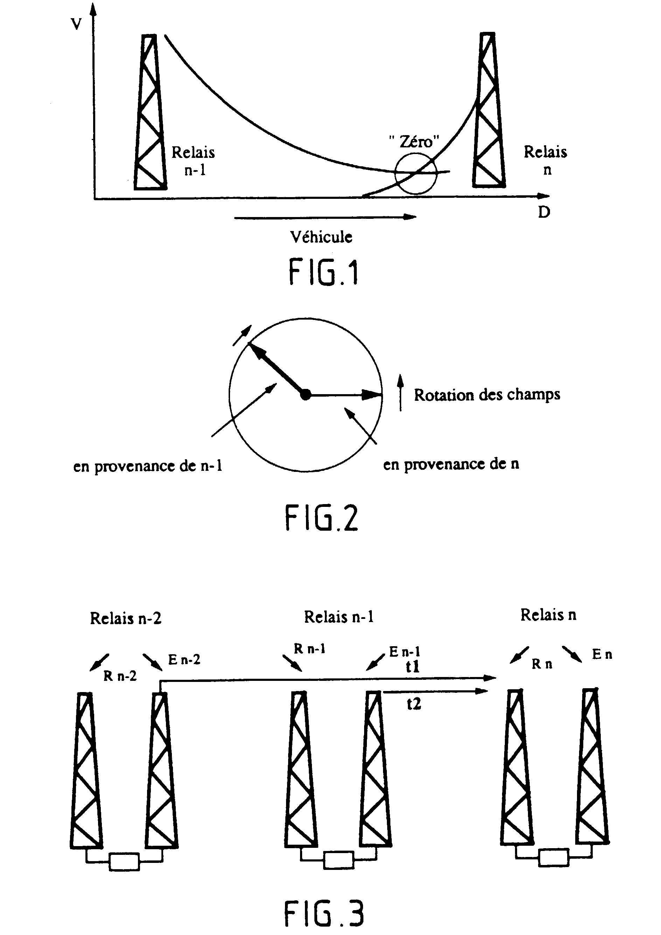

On a représenté sur la figure 1 la variation d'amplitude des champs des signaux émis par deux relais, par exemple (n-1) et (n). Lorsque le véhicule circule dans la zone où les champs sont égaux, ou quasi égaux, et qu'il y a opposition de phase, il ne reçoit plus rien ou seulement un signal fortement atténué. Par convention, on appelle cette zone, zone de quasi égalité des champs ou "Zéro".

Le "Zéro" est obtenu, dans le cas antérieur d'une polarisation verticale et comme on peut le comprendre grâce a la figure 2, lorsque les phases en rotation du signal en provenance du relais (n-1) et du signal du relais (n) sont en opposition.

Selon l'invention, les antennes émettrices des relais sont inclinées alternativement d'un côté ou de l'autre de la verticale de 45° d'un relais à l'autre, c'est-à-dire, dans le cas de la figure 3, que l'antenne émettrice Eₙ₋₂ du relais (n-2) va être inclinée de 45° d'un côté par rapport à la verticale, alors que l'antenne émettrice Eₙ₋₁ du relais (n-1) sera également inclinée de 45°, mais de l'autre côté par rapport à la verticale, et celle Eₙ du relais (n) à nouveau de 45° du même côté que l'antenne du relais (n-2) et ainsi de suite. Dans le cas des chaînes de relais selon les brevets précédemment cités, chaque antenne réceptrice Rₙ₋₂, Rₙ₋₁ Rₙ a bien entendu la même inclinaison que antenne émettrice du relais précédent. Comme le montre la figure 3, la réception par le relais (n) de l'émission du relais (n-2) va être affaiblie par le croisement de polarisation. La modulation de la courbe amplitude/fréquence créée par la différence de temps de parcours t₂-t₁ va être considérablement diminuée. La bande passante n'est dans ce cas plus limitée que par les filtres du système et non par les effets de la pseudo-période de la somme des deux signaux HF (celui de n-2 et celui de n-1) ayant parcouru des trajets différents. La figure 3 montre également que, dans le cas d'un réémetteur, l'antenne d'émission d'un relais est croisée avec son antenne de réception. Cela augmente le découplage entrée-sortie des relais.

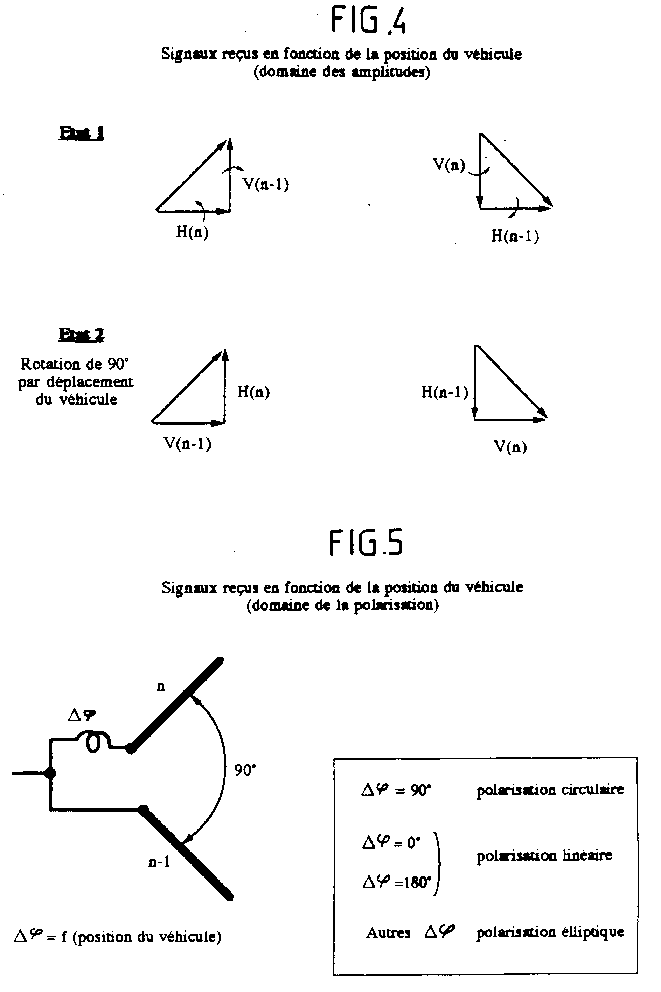

Si l'on se reporte maintenant à la figure 4, on voit que les champs émis par les relais (n-1) et (n) reçus par l'antenne du véhicule comportent une composante verticale V et une composante horizontale H. L'antenne mobile, sur le véhicule, reçoit deux champs verticaux, l'un Vₙ en provenance de (n) et l'autre Vₙ₋₁ en provenance de (n-1). De façon similaire, elle reçoit deux autres champs horizontaux Hₙ et Hₙ₋₁. Il en est de même entre les relais (n) et (n+1), les relais (n+1) et (n+2), etc... Ces champs se composent comme le montre la figure 4.

Lorsque le véhicule se déplace du relais (n-1) vers le relais (n) les champs reçus tournent, comme dans le cas de la figure 2, la phase étant fonction de la position du mobile. Ces phases des champs en provenance de (n) et de (n-1) tournent en sens inverse.

On voit sur la figure 5 les variations de la polarisation résultante.

Tout se passe comme si l'on avait une seule antenne d'émission constituée de deux éléments rayonnants perpendiculaires entre eux. Un élément correspondant au signal provenant de (n) et un élément correspondant au signal provenant de (n-1). En fonction de la position du véhicule, la différence de phase Δφ, (représentée symboliquement sur la figure par un enroulement), des éléments verticaux et horizontaux est variable entre 0 et 360°.

Lorsque Δφ = 90°, la polarisation est circulaire.

Lorsque Δφ = 0 ou 180°, la polarisation est linéaire, horizontale ou verticale, mais dans la pratique il n'y a jamais de polarisation linéaire mais une polarisation elliptique.

Pour toutes le autres valeurs, la polarisation est elliptique.

Il n'y a donc plus d'annulation complète de l'amplitude résultante.

Bien entendu, l'invention s'applique aux systèmes décrits dans les brevets de la déposante cités plus haut, mais également à tout système de radiodiffusion dans lequel un réseau d'émetteurs, de relais ou de réémetteurs émettent sur la même fréquence.

L'invention permet non seulement d'obtenir le but recherché, l'élimination des "Zéros", quel que soit le système ou le réseau d'émetteurs, mais aussi d'améliorer les résultats obtenus grâce aux inventions des deux premières demandes de brevet, c'est-à-dire améliorer le découplage antenne d'émission-antenne de réception des relais dans le cas où on l'applique à un tel système et atténuer beaucoup plus fortement la réception du relais (n-2).

## Revendications

1. Procédé de radiodiffusion à isofréquence destiné a la réception à bord d'un véhicule et sur la même fréquence d'un même programme tout le long du trajet parcouru, dans lequel on dispose, au voisinage du trajet, des émetteurs ou réémetteurs pourvus d'au moins une antenne d'émission et calés sur la même fréquence, caractérisé en ce que la polarisation du champ émis par chaque émetteur ou réémetteur fait un angle de 45° avec la verticale, les polarités des antennes d'émission de deux émetteurs ou réémetteurs voisins faisant entre elles un angle de 90°.

2. Dispositif de transmission d'une émission de radiodiffusion en isofréquence pour la mise en oeuvre du procédé selon la revendication 1, comportant au moins deux émetteurs avec chacun au moins une antenne d'émission, caractérisé en ce que l'antenne d'émission (Eₙ₋₂ ; Eₙ₋₁ ; Eₙ) est inclinée de 45° par rapport à la verticale de manière à être orthogonale à celle (Eₙ₋₁ ; Eₙ ; Eₙ₊₁) de l'émetteur voisin inclinée également de 45° mais dans l'autre sens.

3. Dispositif de radiodiffusion a isofréquence selon la revendication 2 dans lequel lesdits émetteurs sont directionnels et deux émetteurs consécutifs émettent approximativement dans la même direction, les antennes étant constituées de groupement directionnels d'antennes décalés dans l'espace de λ/4, groupements alignés de façon que les champs émis s'ajoutent dans la direction de l'émission et se soustraient pour s'annuler dans la direction opposée, caractérisé en ce que l'antenne d'émission (Eₙ) de chaque émetteur est orthogonale à l'antenne de réception (Rₙ) du même émetteur.

## Patentansprüche

1. Verfahren zur Gleichfrequenzrundfunkübertragung, die zum Empfang an Bord eines Fahrzeugs bestimmt ist und auf der gleichen Frequenz eines gleichen Programms entlang der gesamten zurückgelegten Strecke erfolgt, bei dem der Strecke benachbart Sender oder Ballsender angeordnet sind, die mit zumindest einer Sendeantenne versehen und auf die gleiche Frequenz abgestimmt sind,
**dadurch gekennzeichnet, daß**
die Polarisation des von jedem Sender oder Ballsender ausgesandten Feldes in einem Winkel von 45° zur Vertikalen steht, und
die Polaritäten der Sendeantennen von zwei benachbarten Sendern oder Ballsendern einen Winkel von 90° zwischen sich einschließen.

2. Vorrichtung zur Übertragung einer Gleichfrequenzrundfunksendung zum Umsetzen des Verfahrens nach Anspruch 1, mit zumindest zwei Sendern, von denen jeder zumindest eine Sendeantenne aufweist,
**dadurch gekennzeichnet, daß**
die Sendeantenne (**E**_{**n-2**}**; E**_{**n-1**}**; E**_{**n**}) zur Vertikalen derart um 45° geneigt ist, daß sie senkrecht zu der (**E**_{**n-1**}**; E**_{**n**}**; E**_{**n+1**}) des benachbarten Senders ist, die ebenfalls um 45°, jedoch in der anderen Richtung, geneigt ist.

3. Vorrichtung zur Gleichfrequenzrundfunkübertragung nach Anspruch 2, bei der die Sender eine Richtcharakteristik aufweisen und zwei aufeinanderfolgende Sender annähernd in die gleiche Richtung senden, wobei die Antennen aus einer Gruppierung von räumlich um λ/4 verschobenen Richtantennen bestehen, wobei die Gruppierungen derart ausgerichtet sind, daß die ausgesandten Felder sich in Richtung der Aussendung steigern und sich in der entgegengesetzten Richtung aufheben,
**dadurch gekennzeichnet, daß**
die Sendeantenne (**E**_{**n**}) jedes Senders senkrecht zur Empfangsantenne (**R**_{**n**}) des gleichen Senders ist.

## Claims

1. A method for isofrequency broadcasting, intended for the reception, on board a vehicle and on the same frequency, of the same program for the entire length of the route travelled, in which transmitters or retransmitters provided with at least one transmitting antenna and set to the same frequency are arranged in the vicinity of the route, characterised in that the polarisation of the field emitted by each transmitter or retransmitter forms an angle of 45° with the vertical, the polarities of the transmitting antennas of two adjacent transmitters or retransmitters forming an angle of 90° between them.

2. A device for the transmission of an isofrequency broadcasting transmission for implementing the method according to claim 1, comprising at least two transmitters each with at least one transmitting antenna, characterised in that the transmitting antenna (Eₙ₋₂; Eₙ₋₁; Eₙ) is inclined by 45° relative to the vertical so as to be orthogonal to that (Eₙ₋₁; Eₙ**;** Eₙ₊₁) of the neighbouring transmitter also inclined at 45° but in the opposite direction.

3. A device for isofrequency broadcasting according to Claim 2, in which said transmitters are directional and two consecutive transmitters transmit approximately in the same direction, the antennas being formed of directional groupings of antennas offset in space by λ/4, which groupings are aligned such that the fields emitted add to each other in the direction of emission and subtract from each other to be cancelled out in the opposite direction, characterised in that the transmitting antenna (Eₙ) of each transmitter is orthogonal to the receiving antenna (Rₙ) of the same transmitter.
